(19) Europäisches Patentamt

European Patent Office

Office européen des brevets

(11) Veröffentlichungsnummer: **0 405 216 B1**

## (12) EUROPÄISCHE PATENTSCHRIFT

(45) Veröffentlichungstag der Patentschrift: **14.12.94**

(21) Anmeldenummer: **90111037.9**

(22) Anmeldetag: **12.06.90**

(51) Int. Cl.⁵: **C08L 21/00**, //(C08L21/00, 11:00)

---

(54) Kautschukmischungen enthaltend Schwefel-modifiziertes Polychloroprengel.

---

(30) Priorität: **24.06.89 DE 3920745**

(43) Veröffentlichungstag der Anmeldung:
**02.01.91 Patentblatt 91/01**

(45) Bekanntmachung des Hinweises auf die
Patenterteilung:
**14.12.94 Patentblatt 94/50**

(84) Benannte Vertragsstaaten:
**DE FR GB IT**

(56) Entgegenhaltungen:
**EP-A- 0 173 834**
**EP-A- 0 222 288**

(73) Patentinhaber: **BAYER AG**

**D-51368 Leverkusen (DE)**

(72) Erfinder: **Engels, Hans-Wilhelm, Dr.**
**Dickeicherfeld 12**
**D-5014 Kerpen 3 (DE)**
Erfinder: **Eisele, Ulrich, Dr.**
**Alfred-Kubin-Strasse 13**
**D-5090 Leverkusen 1 (DE)**
Erfinder: **Obrecht, Werner, Dr.**
**Holderbergerstrasse 108**
**D-4130 Moers 2 (DE)**
Erfinder: **Wendling, Peter**
**Franz-Marc-Strasse 9**
**D-5090 Leverkusen 1 (DE)**
Erfinder: **Stollfuss, Bernd**
**Am Katterbach 76**
**D-5060 Bergisch-Gladbach 2 (DE)**

---

**Beschreibung**

Die Erfindung betrifft ein Verfahren zur Herstellung von Mischungen aus C = C-Doppelbindungen enthaltendem Kautschuk und Schwefel-modifiziertem Polychloroprengel, diese Mischungen selbst und daraus hergestellte Vulkanisate. Die Vulkanisate zeigen verminderte Hystereverluste.

Unter Hystereseverlust versteht man in der Kautschuktechnologie den Energieverlust, der bei dynamischer Beanspruchung des Elastomeren irreversibel in Wärme umgewandelt wird. Als Meßgröße für Hystereseverluste dient der tan $\delta$, der als Verhältnis von Verlustmodul zu Speichermodul definiert ist; vgl. z.B. auch DIN 53 513, DIN 53 535. Erniedrigung des tan $\delta$ im anwendungstechnisch wichtigen Temperatur/Frequenz- bzw. Amplituden-Bereich führt z.B. zu vermindertem Hitzeaufbau ("heat built-up") im Elastomeren. Reifenlaufflächen aus Kautschukvulkanisat mit vermindertem Hystereseverlust zeichnen sich durch reduzierten Rollwiderstand und infolgedessen durch geringeren Treibstoffverbrauch der damit ausgestatteten Fahrzeuge aus.

Trotz der Vielfalt verfügbarer Kautschuktypen hat sich für die Herstellung von Fahrzeugreifen die Aufmerksamkeit der Fachwelt vor allem auf Naturkautschuk (NR), cis-Polybutadien (BR) und Styrol/Butadien-Copolymerisate (SBR) gerichtet. Diese Kautschuke oder ihre Mischungen werden bei der Reifenherstellung weltweit verwendet.

Mit dem Ziel verminderter Energiekosten hat man den Einfluß der für Reifenlaufflächen verwendeten Kautschuktypen auf den Rollwiderstand des Reifens untersucht; H.J. Barager, L.R. Mayo, "Compositions of Neoprene for Low Rolling Resistance Treads" in Rubber Division Symposia Vol. I, 122nd Meeting of the Rubber Division Amer. Chem. Soc., Chicago/Illinois, 5.-7. Oktober 1982. Danach besitzen Reifenlaufflächen aus vulkanisiertem Polychloropren (CR) gegenüber herkömmlichen Reifenlaufflächen geringeren Rollwiderstand, aber unzureichende Abriebbeständigkeit. Durch Verschnitt der reinen Polychloroprenmischungen mit NR, SBR oder BR wird der Abriebwiderstand zwar verbessert, das erreichte Niveau entspricht aber noch nicht den heute üblichen Laufflächen. Darüber hinaus geht bei den Verschnitten ein erheblicher Teil der durch reine CR-Elastomere erzielbaren Hysterese-Gewinne verloren.

Aufgabe der Erfindung war es, Kautschuke zur Verfügung zu stellen, die sich zu Vulkanisaten mit einer verbesserten Kombination von

1. geringem Rollwiderstand - ausgedrückt als möglichst niedriger Hystereseverlust (tan $\delta$)- und

2. geringem Abrieb

verarbeiten lassen.

EP-A-222 288 beschreibt elastomere Massen aus Polychloroprensol und CR-Gel, die eine verbesserte Verarbeitbarkeit gegenüber der reinen Solkomponente aufweisen.

Überraschenderweise wurde nun gefunden, daß Kautschukmischungen mit einem Gehalt an sog. "vorvernetztem" Polychloropren diese Anforderungen erfüllen.

Gegenstand der Erfindung sind Mischungen aus

A. Polychloropren und

B. anderem C = C-Doppelbindungen enthaltendem Kautschuk,

wobei, bezogen auf die Summe der Komponenten A + B, die Menge Polychloropren A 1 bis 40, vorzugsweise 3 bis 30, insbesondere 5 bis 20 Gew.-% beträgt,

dadurch gekennzeichnet, daß, wieder bezogen auf die Summe der Komponenten A + B, 1 bis 30, vorzugsweise 3 bis 15, insbesondere 5 bis 12 Gew.-% Polychloropren Schwefel- modifiziert und vernetzt sind.

Dabei berücksichtigt die Diskrepanz der Polychloroprenmengen im Oberbegriff und im kennzeichnenden Teil der obigen Definition den Umstand, daß nicht der gesamte Teil des Polychloroprens als Gel vorliegen muß. Der Begriff "Gel" bedeutet in diesem Zusammenhang den Prozentsatz des unlöslichen Anteils, bestimmt durch Extraktion mit Toluol: 150 mg Polychloropren werden in 20 ml Toluol 16 Stunden stehen gelassen und danach 2 Stunden geschüttelt. Der unlösliche Anteil wird abzentrifugiert, bei 70°C getrocknet und gewogen.

Der Quellungsindex ($Q_i$) des Gels beträgt 5 bis 90, vorzugsweise 10 bis 60 und wird aus dem Gehalt des im Gel (bei einer Zentrifugation mit 500.000 m/sec$^2$) verbleibenden Toluols ($m_t$) und dem Trockengewicht des Gels ($m_{Gel}$) berechnet:

$$Q_i = \frac{m_T}{m_{Gel}} \cdot$$

Geeignete Polychloroprene A sind Chloroprenpolymerisate, die neben polymerisierten 2-Chloropreneinheiten bis 30, vorzugsweise bis 20 Gew.-%, bezogen auf Chloroprenpolymerisat, copolymerisierte Einheiten anderer ethylenisch ungesättigter Monomerer enthalten können, also Polychloroprene, wie sie beispielsweise in "Methoden der Organischen Chemie" (Houben-Weyl), Bd. E20/2, 842-859, Georg Thieme Verlag, Stuttgart - New York 1987, beschrieben sind.

Sie besitzen im allgemeinen Mooney-Viskositäten (nach DIN 53 523) von 5 bis 140, vorzugsweise von 10 bis 120, (ML 1 + 4)/100 °C und Glasübergangstemperaturen von unter 0 °C, vorzugsweise unter -25 °C.

Die Menge an elementarem Schwefel, die für die Herstellung Schwefel-modifizierten Polychloroprens verwendet wird, beträgt 0,05 bis 2,5, vorzugsweise 0,1 bis 1, Gew.-%, bezogen auf eingesetzte Monomere.

Bevorzugte, mit Chlompren copolymerisierbare, ethylenisch ungesättigte "andere Monomere" umfassen Verbindungen mit 3 bis 12 C-Atomen und 1 oder 2 copolymerisierbaren C = C-Doppelbindungen pro Molekül. Beispiele bevorzugter "anderer Monomerer" sind Styrol, 2,3-Dichlorbutadien, 1-Chlorbutadien, Butadien, Isopren, Acrylsäure, Methacrylsäure, Acrylnitril und Methylacrylnitril. Wichtigste Comonomere sind 2,3-Dichlorbutadien und 1-Chlorbutadien.

Besonders bevorzugte Polychloroprene A sind frei von copolymerisierten Einheiten "anderer" ethylenisch ungesättiger Monomerer.

Die Herstellung der Polychloroprene A kann auf an sich bekannte Weise, z.B. durch Emulsionspolymerisation bei 0 bis 70 °C, vorzugsweise bei 5 bis 50 °C erfolgen.

Die Herstellung vernetzter Polchloroprene kann durch Polymerisation bis zu hohen Umsätzen oder - bei Monomerzulaufverfahren - durch Polymerisation bei hohen internen Umsätzen (DE-AS 1 248 91) erfolgen. Die Vernetzung der Polychloroprene kann auch durch Copolymerisation vernetzend wirkender multifunktioneller Verbindungen erreicht werden. Bevorzugte vernetzend wirkende multifunktionelle Comonomere sind Verbindungen mit mindenstens 2, vorzugsweise 2 oder 3, copolymerisierbaren C = C-Doppelbindungen, wie z.B. Diisopropenylbenzol, Divinylbenzol, Divinylether, Divinylsulfon, Diallylphthalat, Triallylcyanurat, Triallylisocyanurat, 1,2-Polybutadien, N,N′-m-Phenylendimaleinimid, Triallyltrimellitat sowie die Acrylate und Methacrylate von mehrwertigen, vorzugsweise zwei- bis vierwertigen, $C_2$-$C_{10}$-Alkoholen,wie z.B. von Ethylenglykol, Propandiol-1,2, Propandiol-1,3, Butandiol-1,4, Hexandiol-1,6, Polyethylenglykol mit 2 bis 20, vorzugsweise 2 bis 4, Oxyethyleneinheiten, Trimethylolethan und -propan, Tetramethylolmethan. Bevorzugte vernetzend wirkende Acrylate und Methacrylate umfassen

Ethylendiacrylat und -dimethacrylat,
Propylendiacrylat und -dimethacrylat,
Isobutylendiacrylat und -dimethacrylat,
Butylendiacrylat und -dimethacrylat,
Hexandioldiacrylat und -dimethacrylat,
Di-, Tri- und Tetraethylenglykoldiacrylat und -dimethacrylat,
Trimethylolethantriacrylat und -trimethacrylat,
Trimethylolpropantriacrylat und -trimethacrylat,
Tetramethylolmethantetraacrylat und -tetramethacrylat.

Die Herstellung vernetzter Polychloroprene kann auch einfach durch eine Polymerisation in Abwesenheit von Reglern erfolgen.

Vernetzte Polychloroprene sind beispielsweise aus den DE-AS 12 29 716, 12 47 666, 17 20 107, den US-PS 3 147 318, 3 714 296, 3 849 519 und der EP-A 222 288 bekannt.

Der Gelanteil des Polychloroprens A muß erfindungsgemäß Schwefel-modifiziert sein, während das für den Toluollöslichen Anteil des Polychloroprens A erlaubt, aber nicht notwendig ist. Demnach kann also das Polychloropren A auch aus einer Mischung aus Schwefel-modifiziertem Polychloroprengel und aus Schwefel-freiem Toluol-löslichem Polychloropren bestehen. Schwefel-modifizierte Polychloroprene sind beispielsweise aus den DE-OS 1 911 439, 2 018 736, 2 755 074, 3 246 748, der DE-PS 2 645 920, den EP-A 21 212, 200 857, der FR-PS 1 457 004 und den US-PS 2 264 713, 3 378 538, 3 397 173 und 3 507 825 bekannt. Bevorzugt sind Schwefel-modifizierte Polchloroprene, die Xanthogenat- und/oder Dithiocarbamat-Funktionen aufweisen.

Bevorzugte Kautschuke B enthalten C = C-Doppelbindungen entsprechend Iodzahlen von mindestens 2, vorzugsweise von 5 bis 470. Die Bestimmung der Iodzahlen erfolgt im allgemeinen durch Addition von Iodchlorid in Eisessig nach Wijs, DIN 53 241, Teil 1. Die Iodzahl definiert die Iodmenge in Gramm, die von 100 g Substanz chemisch gebunden wird.

Die Kautschuke B umfassen u.a. EPDM, Butylkautschuk, Nitrilkautschuk, hydrierten Nitrilkautschuk, Naturkautschuk, Polyisopren, Polybutadien und Styrol/Butadien-Copolymerisate (SBR) sowie Gemische derselben.

Die Kautschuke B besitzen in der Regel Mooney-Viskositäten (DIN 53 523) von 10 bis 150, vorzugweise von 25 bis 80 (ML 1 + 4)/100 ° C.

Der Ausdruck "EPDM" steht für Ethylen/Propylen/Dien-Terpolymerisate. EPDMs umfassen Kautschuke, in denen das Gewichtsverhältnis von Ethylen- zu Propylenresten im Bereich von 40:60 bis 65:35 liegt und die 1 bis 20 C = C-Doppelbindungen/1.000 C-Atome aufweisen können. Als geeignete Dien-Monomere im EPDM seien beispielsweise genannt: konjugierte Diene, z.B. Isopren und Budadien-1,3, und nichtkonjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkyliden- und Alkenylnorbornene, z.B 5-Ethyliden-2-norbornen, 5-Butyliden-2-norbornen, 2-Methallyl-5-norbornen, 2-Isopropenyl-5-norbornen und Tricyclo-diene.

Bevorzugt sind die nichtkonjugierten Diene Hexadien-1,5, Ethyliden-norbornen und Dicyclopentadien. Der Diengehalt im EPDM beträgt vorzugsweise 0,5 bis 10 Gew.-%, bezogen auf EPDM.

Derartige EPDM-Kautschuke sind z.B. in der DE-OS 2 808 709 beschrieben.

Der Begriff "Butylkautschuk" im Sinne der Erfindung umfaßt Isobuten-Copolymerisate aus 95 bis 99,5, vorzugsweise 97,5 bis 99,5, Gew.-% Isobuten und 0,5 bis 5, vorzugsweise 0,5 bis 2,5, Gew.-% copolymerisierbarem Dien, wie z.B. Butadien, Dimethylbutadien, Pentadien-1,3, insbesondere Isopren. Butylkautschuk wird in großtechnischem Maßstab fast ausschließlich als Isobuten/Isopren-Copolymerisat durch kationische Lösungspolymerisation bei niedriger Temperatur hergestellt; vgl. z.B. Kirk-Othmer, Encyclopedia of Chemical Technology, 2nd ed., Bd. 7, S 688, Interscience Publ., New York-London-Sydney 1965 und Winnacker-Küchler, Chemische Technologie, 4. Aufl., Bd. 6, S. 550-555, Carl Hanser Verlag, München-Wien 1962.

Der Ausdruck "Nitrilkautschuk" steht für Butadien/Acrylnitril-Copolymerisate mit einem Gehalt an copolymerisiertem Acrylnitril von 5 bis 60, vorzugsweise 10 bis 50 Gew.-%. "Hydriert" bedeutet in diesem Zusammenhang, daß 90 bis 98,5, vorzugsweise 95 bis 98 % der hydrierbaren C = C-Doppelbindungen hydriert sind, während die C = N-Dreifachbindungen der Nitrilgruppen nicht hydriert sind. Die Hydrierung von Nitrilkautschuk ist bekannt; US-PS 3 700 637, DE-OS 25 39 132, 30 46 008, 30 46 251, 32 27 650, 33 29 974, EP-A 111 412, FR-PS 2 540 503.

Bevorzugte Styrol/Butadien-Copolymerisate sind solche mit Gehalten an einpolymerisiertem Styrol von 18 bis 60, vorzugsweise 20 bis 50, Gew.-%. Lösungs- und Emulsionspolymerisate sind besonders bevorzugt.

Den erfindungsgemäßen Kautschukmischungen können natürlich Füllstoffe jeglicher Art zugesetzt werden. Bevorzugte Füllstoffe sind Ruße. Bevorzugte Ruße besitzen Oberflächen von 35 bis 200 m$^2$/g (CTAB-Bestimmung). Besonders bevorzugte Ruße sind SAF-, HAF-, FEF-, ISAF- und SRF-Ruße und ihre Mischungen. Auch Mischungen von Rußen mit Kieselsäuren (mit und ohne Füllstoffaktivatoren) und Kieselsäuren, die den Rußen vergleichbare Teilchengrößen und Oberflächen besitzen, sind als Füllstoffe gut geeignet. Der Füllstoffgehalt kann in weiten Bereichen schwanken, liegt aber oft bei 30 bis 80 Gew.-Teilen Füllstoff pro 100 Gewichtsteile Kautschuk (A + B).

Die erfindungsgemäßen Mischungen können auf verschiedene Weise hergestellt werden: zum einen ist es selbstverständlich möglich, die festen Einzelkomponenten zu mischen. Dafür geeignete Aggregate sind beispielsweise Walzen und Innenmischer. Vorzugsweise erfolgt das Mischen durch Vereinigen der Latices der einzelnen Kautschuke; die Isolierung der erfindungsgemäßen Mischungen kann, wie üblich, durch Eindampfen, Ausfällen oder Gefrierkoagulation (vgl. US-PS 2 187 146) erfolgen. Durch Einmischen von Füllstoffen in die Latexmischungen und anschließende Aufarbeitung können die erfindungsgemäßen Mischungen direkt als Kautschuk/Füllstoff-Formulierungen erhalten werden. Weiterer Gegenstand der Erfindung ist also ein Verfahren zur Herstellung der beschriebenen Mischungen durch Vereinigen der Komponenten.

Zur Erzielung erwünschter Rohmischungs- oder Vulkanisateigenschaften können den erfindungsgemäßen Mischungen die üblichen Verarbeitungshilfsmittel, Weichmacher, Alterungsschutzmittel, Faktisse und Harze zugesetzt werden.

Als Vernetzungssysteme kommen alle in der Kautschuktechnik bekannten Systeme wie Schwefelvernetzung, Peroxidvernetzung, Urethanvernetzung, Metalloxidvernetzung, Harzvernetzung und deren Kombinationen in Frage. Bevorzugte Vernetzungssysteme richten sich nach den in den erfindungsgemäßen Mischungen eingesetzten Kautschuken B, wobei Schwefelvernetzungssysteme besonders bevorzugt sind.

Weiterer Gegenstand der Erfindung sind die aus den beschriebenen Mischungen hergestellten Vulkanisate.

Beispiele

a) Herstellung der Polychloropren-Gele I bis VI

In einem 250 l-Rührreaktor wurde nach der folgenden Grundrezeptur (Mengenangaben in Gewichtsteilen) polymerisiert:

```
Monomere                               100

entsalztes Wasser (Gesamtmenge)        125

Na-Salz der disproportionierten
Abietinsäure                           5,3

Na-Salz des Kondensationsproduktes
aus Naphthalinsulfonsäure und Formal-
dehyd                                  0,6

KOH                                    0,5

K₂S₂O₈                                 0,11

Na-Salz der Anthrachinonsulfonsäure    0,06

Schwefel                            }
Na-dibutyldithiocarbamat (DBDTC)}    siehe Tabelle 1
Tetraethylthiuramdisulfid (TETD)}
```

In Abweichung von der obigen Rezeptur wurden bei Polychloropren-Gel II 3,5 Gew.-Teile Na-Salz der disproportionierten Abietinsäure eingesetzt.

Im Reaktor wurde die wäßrige Phase bestehend aus entsalztem Wasser, Na-Salz der disproportionierten Abientinsäure, Na-Salz der methylen-verbrückten Naphthalinsulfonsäure, Na-salz der Anthrachinonsulfonsäure und KOH vorgelegt, mit Stickstoff gespült und auf die in der Tabelle 1 angegebene Temperatur aufgeheizt.

Dann wurden die mit Stickstoff gespülten Monomeren zugegeben. Der Vernetzer Ethylenglykoldimethacrylat war im Monomeren gelöst. Nach Einstellung der in der Tabelle angegebenen Temperatur wurden der Schwefel als 50 gew.-%ige wäßrige Dispersion und DBDTC als 30 gew.-%ige wäßrige Lösung zugesetzt. Dann wurde mit einer geringen Menge einer mit Stickstoff gespülten verdünnten wäßrigen K₂S₂O₈-Lösung initiiert und dann die Polymerisation durch Zudosieren dieser wäßrigen mit Stickstoff gespülten Persulfatlösung aufrecht erhalten.

Der Umsatz wurde gravimetrisch verfolgt. Beim gewünschten Umsatz wurde mit 0,03 Gew.-Teilen, bezogen auf Latex, einer wäßrigen 2,5 gew.-%igen Lösung von Diethylhydroxylamin abgestoppt, und der Latex mit der in den Tabellen angegebenen Menge an Tetraethylthiuramdisulfid (TETD) versetzt. TETD wurde als 25 gew.-%ige wäßrige Emulsion einer toluolischen Lösung eingesetzt.

Der Latex wurde auf ca. 500 ppm Restchloropren (bezogen auf Latex) entgast.

b) Herstellung von Polychloropren-Gel VII

In einem 20 l-Rührreaktor wurde nach der folgenden Grundrezeptur (Mengenangaben in Gewichtsteilen) polymerisiert:

5

| | |
|---|---|
| Chloropren | 97 |
| Ethylenglykoldimethacrylat | 3,0 |
| Entsalztes Wasser | 150 |
| Na-Salz der disproportionierten Abietinsäure | 3,85 |
| Na-Salz des Kondensationsproduktes aus Naphthalinsulfonsäure und Formaldehyd | 0,6 |
| NaOH | 0,3 |
| Natriumpyrophosphat | 0,5 |
| Triisopropanolamin | 0,5 |
| Schwefel | 0,5 |
| $K_2S_2O_8$ | 0,1 |
| Na-Salz der Anthrachinonsulfonsäure | 0,02 |
| Tetraethylthiuramdisulfid (TETD) | 0,7 |
| Na-Dibutyldithiocarbamat (DBDTC) | 0,42 |

Im Reaktor wurde die wäßrige Phase bestehend aus entsalztem Wasser, Na-Salz der disproportionierten Abietinsäure, Na-Salz des Kondensationsproduktes aus Naphthalinsulfonsäure und Formaldehyd, Natriumpyrophosphat und Triisopropanolamin und die Monomerphase bestehend aus Chloropren und Ethylenglykoldimethyacrylat sowie Schwefel (als 50 %ige wäßrige Dispersion) vorgelegt, mit Stickstoff gespült und unter Rühren auf 50 °C erwärmt.

Durch Zugabe einer geringen Menge einer Aktivatorlösung bestehend aus 0,1 Gew.-Teilen $K_2S_2O_8$ und 0,02 Gew.-Teilen Na-Salz der Anthrachinonsulfonsäure wurde die Polymerisation gestartet. Während der Polymerisation wurde die Aktivatorlösung so zudosiert, daß die gewünschte Temperatur von 50 °C nicht überschritten wurde. Der Umsatz wurde gravimetrisch verfolgt. Bei einem Umsatz von 79 % wurde mit 0,1 Gew.-Teil Phenothiazin und 0,7 Gew.-Teilen TETD (gelöst in Monomeren) abgestoppt und das überschüssige Monomere bis auf einen Restgehalt von etwa 500 ppm (bezogen auf Latex) durch Wasserdampfdestillation bei vermindertem Druck entfernt. Der entgaste Latex wurde mit 0,42 Gew.-Teilen DBDTC als 30 %ige wäßrige Lösung versetzt und 3 Stunden bei 40 °C peptisiert.

Tabelle 1: Herstellung der Polychloropren-Gele (CR-Gele) I bis VII

| Verwendet in Bei-spielen | CR-Gel | Schwefel [Gew.-Teile] | EGDM [Gew.-Teile] | DCB | Temp. [°C] | DBDTC [Gew.-Teile] | TETD [Gew.-Teile] | Umsatz [%] | Gel-Gehalt [%] | Quellungs-index in Toluol |
|---|---|---|---|---|---|---|---|---|---|---|
| 1-9 | I | 0,5 | 5 | 0 | 30 | 1,0 | 3,0 | 83 | 85,6 | 10 |
| 10 | II | 0,5 | 6,5 | 6 | 30 | 1,0 | 3,0 | 80 | 86,1 | 11 |
| 11 | III | 0,5 | 1 | 0 | 30 | 1,0 | 3,0 | 82 | 24,7 | 60 |
| 12 | IV | 0,5 | 10 | 0 | 30 | 1,0 | 3,0 | 80 | 90,6 | 10 |
| 13 | V | 0,5 | 5 | 0 | 45 | 1,0 | 3,0 | 80 | 82,8 | 12 |
| 14 | VI | 0,3 | 5 | 0 | 30 | 2,0 | 3,5 | 78 | 89,2 | 11 |
| 15 | VII | 0,5 | 3 | 0 | 50 | 0,42 | 0,7 | 79 | 74,8 | 15 |

EGDM = Ethylenglykoldimethacrylat; DCB = 2,3-Dichlorbutadien; DBDTC = Na-Dibutyldithiocarbamat
TETD = Tetraethylthiuramdisulfid

Polychloropren-Gel VIII

ist ein schwefelfreies Polychloropren, hergestellt nach dem in der DE-OS 3 120 992 beschriebenen Verfahren (Umsatz 80 %).

Herstellung der erfindungsgemäßen Kautschukmischungen

Eingesetzte Komponenten:

®Buna SL 750,      Handelsprodukt der Fa. Hüls AG/Marl, Lösungs-SBR mit einem Gehalt an einpolymerisiertem Styrol von 18 Gew.-% ölverstreckt (37,5 Gew.-% Öl)

®Buna EM 1712,     Handelsprodukt der Fa. Hüls AG/Marl, Emulsions-SBR mit einem Gehalt an einpolymerisiertem Styrol von 23,5 Gew.-%, ölverstreckt (37,5 Gew.-% Öl)

®Buna EM 1721,     Handelsprodukt der Fa. Hüls AG/Marl, Emulsions-SBR mit einem Gehalt an einpolymerisiertem Styrol von 40 Gew.-%, ölverstreckt (37,5 Gew.-% Öl)

®Buna EM 2116,     Handelsprodukt der Fa. Hüls AG/Marl, Emulsions-SBR mit einem Gehalt an einpolymerisiertem Styrol von 23,5 Gew.-%, Latex mit 24 Gew.-% Feststoffgehalt

®Buna CB 22,       Handelsprodukt der Fa. Bayer AG, Neodym-Polybutadien mit einem cis-1,4-Gehalt von 98 %

®Buna CB 30,       Handelsprodukt der Fa. Bayer AG, Titan-Polybutadien mit einem cis-1,4-Gehalt von 93 %, ölverstreckt (37,5 Gew.-% Öl)

®Baypren 610,      Handelsprodukt der Fa. Bayer AG, gelfreies Polychloropren, Schwefel-modifiziert

SMR 5,             Handelsprodukt der Standard Malaysian Rubber Producers, Naturkautschuk mit Defo 700

```
Ruße  N 220  }
      N 234  }   Handelsprodukte der Fa. Degussa/ Hanau
      N 339  }
      Corax 3}
```

Ingralen 450,      Handelsprodukt des R. Fuchs Mineralölwerkes, Mannheim/Weichmacheröl
ZnO-RS             Handelsprodukt der Fa. Zinkweiß-Forschungsgesellschaft mbH/Zinkoxid
®Vulkanox 4010 NA, Handelsprodukt der Fa. Bayer AG, N-Isopropyl-N'-phenyl-p-phenylendiamin (Alterungsschutzmittel)

®Vulkanox HS,      Handelsprodukt der Fa. Bayer AG, 2.2.4-Trimethyl-1,2-dihydrochinolin, polymer (Alterungsschutzmittel)

®Vulkacit NZ,      Handelsprodukt der Fa. Bayer AG, Benzothiazyl-2-tert.-butyl-sulfenamid (Vulkanisationsbeschleuniger)

®Antilux 111,      Handelsprodukt der Fa. Rhein-Chemie Rheinau, Mannheim, Lichtschutzmittel

Verwendete Abkürzungen und ihre Bedeutung:

| Abkürzung | Bedeutung | Bestimmungsmethode |
|---|---|---|
| F | Zugfestigkeit (MPa) | DIN 53 504 |
| D | Bruchdehung (%) | DIN 53 504 |
| M 100 | Spannungswert bei 100 % Dehnung (MPa) | DIN 53 504 |
| M 300 | Spannungswert bei 300 % Dehnung (MPa) | DIN 53 504 |
| H 23 | Shore A Härte bei $23^{\circ}$ C (%) | DIN 53 505 |
| H 70 | Shore A Härte bei $70^{\circ}$ C (%) | DIN 53 505 |
| E 23 | Elastizität bei $23^{\circ}$ C | DIN 53 512 |
| E 70 | Elastizität bei $70^{\circ}$ C | DIN 53 512 |
| tan δ (2 %) | Tangens δ bei Raumtemperatur, 2 % Amplitude | IMAS Energy Resolver |
| tan δ (40) | Tangens δ bei $40^{\circ}$ C | ROELIG |
| tan δ (100) | Tangens δ bei $100^{\circ}$ C | DIN 53 513 |

9

Verwendete Abkürzungen und ihre Bedeutung:

(Fortsetzung)

| Abkürzung | Bedeutung | Bestimmungsmethode |
|---|---|---|
| E' (25) | Speichermodul ($25^{0}$C) 2 % Amplitude (MPa) } | } IMAS Energy |
| E" (25) | Verlustmodul ($25^{0}$C) 2 % Amplitude (MPa) } | } Resolver |
| SE (60) | Speichermodul ($60^{0}$C) (MPa) } | Roelig |
| VE (60) | Verlustmodul ($60^{0}$C) (MPa) } | DIN 53 513 |
| LC | Loss compliance | |
| STR | Weiterreißfestigkeit (N) | Hausvorschrift (Ringprobe 4 mm) |
| HBU 1 | Heat build-up nach 10 Min. ($^{0}$C) | Kompressions- flexometer |
| HBU 2 | Heat build-up nach 25 Min. ($^{0}$C) | DIN 53 533 Teil 3 |
| ABR 4 | Abrieb auf Schmirgelpa- pier der Stärke 40 | DIN 53 516 |
| ABR 6 | Abrieb auf Schmirgelpa- pier der Stärke 60 | DIN 53 516 |

Beispiel 1 (Mischen der Latices)

Polychloropren-Gel I-Latex wurde mit Buna EM 2116-Latex im Gewichtsverhältnis 10:90 (bezogen auf Kautschuk-Feststoff) gemischt. Zur Fällung wurde 2 gew.-%ige wäßrige $CaCl_2$-Lösung zugegeben (5 g $CaCl_2$ pro 100 g Feststoff). Das gefällte Produkt wurde abgetrennt und bei 60°C im Vakuum getrocknet.

Beispiel 2

Analog Beispiel 1; Gewichtsverhältnis CR/SBR 20:80 (bezogen auf Kautschuk-Feststoff).

Beispiele 3 bis 15
(Mischen der Festkautschuke)

Das Polychloropren-Gel wurde aus dem entsprechenden Latex durch Zugabe von 2 gew.-%iger wäßriger $CaCl_2$-Lösung gefällt (5 g $CaCl_2$ pro 100 g Feststoff) und bei 60°C im Vakuum getrocknet.
Die erhaltenen Gele wurden mit dem Dien-Kautschuk im Gewichtsverhältnis 10:90 im Innenmischer verschnitten und gemäß der unten angegebenen Rezeptur fertig compoundiert. Die Zugabe von Schwefel und Beschleuniger erfolgte jeweils auf einer Walze.
Die Verbesserung der Hystereseeigenschaften der erfindungsgemäßen Mischungen der Beispiele 1 und 2 zeigen die Vulkanisate, die nach der aufgeführten Rezeptur hergestellt wurden. Es resultieren Reduzierungen des tan $\delta$ von 23 bis 46 % bei verbesserter Zugfestigkeit und erhöhten Moduli gegenüber dem Vergleichsvulkanisat V-1, einem Vulkanisat eines aus ®Buna EM 2116-Latex durch Zugabe von 5 gew.-

%iger wäßriger CaCl$_2$-Lösung gefällten E-SBR.

| Beispiel | 1 | 2 | V-1 |
|---|---|---|---|
| Kautschuk | 100 | 100 | 100 |
| Ruß Corax 3 | 60 | 60 | 60 |
| Stearinsäure | 2 | 2 | 2 |
| Antilux 111 | 1,5 | 1,5 | 1,5 |
| Vulkanox 4010 NA | 2,5 | 2,5 | 2,5 |
| Vulkanox HS | 1,0 | 1,0 | 1,0 |
| ZnO-RS | 5,0 | 5,0 | 5,0 |
| Schwefel | 1,8 | 1,8 | 1,8 |
| Vulkacit NZ | 1,2 | 1,2 | 1,2 |
| F | 29,4 | 24,1 | 23,7 |
| D | 350 | 200 | 540 |
| M 100 | 4,7 | 8,2 | 2,7 |
| M 300 | 25,5 | - | 12,0 |
| tan $\delta$ ( 40) | 0,118 | 0,105 | 0,154 |
| tan $\delta$ ( 60) | 0,108 | 0,092 | 0,150 |
| tan $\delta$ (100) | 0,079 | 0,066 | 0,122 |
| E′ ( 25) | 17,07 | 18,29 | 14,63 |
| E″ ( 25) | 4,78 | 4,87 | 4,10 |

Die Beispiele 3 und 4 zeigen die Eigenschaften von Vulkanisaten der Mischungen aus Lösungs-SBR (hier speziell Buna SL 750) und CR-Gel I.

Die Verbesserung der Elastizität, des Heat build-up, des tan $\delta$, der Loss compliance wird bei verbesserter Zugfestigkeit und konstantem Abriebverhalten erzielt. Durch Variation der Schwefelmenge bzw. des Füllgrades können vergleichbare Speichermoduli unter Erhalt der verbesserten Hysterese-Eigenschaften eingestellt werden. Nach der Korrelation zwischen Reifeneigenschaften, z.B. Rutschen und Rollwiderstand, und viskoelastischen Eigenschaften (E, HBU, tan $\delta$, etc.) (z.B. Y. Saito, Kautschuk + Gummi, Kunstst. 1986, 39, 30) wird für die Vulkanisate der Beispiele 3 und 4 bei Verwendung als Laufflächencompound in Reifen verringerter Rollwiderstand resultieren.

| Beispiel | 3 | 4 | V-2 |
|---|---|---|---|
| Buna SL 750 | 123,8 | 123,8 | 137,5 |
| CR-Gel I | 10 | 10 | - |
| Ruß N 220 | 65 | 70 | 70 |
| Stearinsäure | 1,0 | 1,0 | 1,0 |
| ZnO-RS | 3,0 | 3,0 | 3,0 |
| Vulkanox 4010 NA | 1,0 | 1,0 | 1,0 |
| Vulkacit NZ | 1,2 | 1,2 | 1,2 |
| Schwefel | 1,5 | 1,5 | 1,8 |
| F | 15,1 | 15,0 | 13,9 |
| D | 385 | 385 | 447 |
| M 100 | 2,3 | 2,4 | 1,8 |
| M 300 | 12,1 | 12,5 | 9,1 |
| H | 64 | 66 | 62 |
| E 23 | 38 | 36 | 38 |
| E 70 | 54 | 51 | 48 |
| HBU-2 | 27,4 | 30 | 37 |
| tan $\delta$ ( 60) | 0,140 | 0,155 | 0,166 |
| SE 60 | 6,89 | 7,26 | 6,75 |
| VE 60 | 0,97 | 1,12 | 1,13 |
| LC | 0,020 | 0,021 | 0,024 |
| ABR 4 | 110 | 105 | 110 |

In Beispiel 5 werden die Eigenschaften der Mischung Buna SL 750 + CR-Gel I in einer Rezeptur mit dem Ruß N 339 gezeigt. Der verstrammende Effekt des CR-Gels kann durch Weichmacheröl (hier 6 Teile Ingralen 450) und Reduktion der Schwefelmenge kompensiert werden, wobei die Vorteile in Bezug auf Elastizität, Heat build up, tan $\delta$ und Loss compliance erhalten bleiben.

| Beispiel | 5 | V-3 |
|---|---|---|
| Buna SL 750 | 123,8 | 137,5 |
| CR-Gel I | 10 | - |
| Ruß N 339 | 65 | 70 |
| ZnO-RS | 3,0 | 3,0 |
| Vulkanox 4010 NA | 1,0 | 1,0 |
| Stearinsäure | 1,0 | 1,0 |
| Ingralen 450 | 6 | - |
| Vulkacit NZ | 1,2 | 1,2 |
| Schwefel | 1,5 | 1,8 |
| F | 16,3 | 16,8 |
| D | 405 | 425 |
| M 100 | 2,2 | 2,1 |
| M 300 | 12,1 | 11,7 |
| H 23 | 62 | 64 |
| H 70 | 60 | 61 |
| E 23 | 41 | 41 |
| E 70 | 55 | 50 |
| HBU-2 | 23,0 | 34,3 |
| tan $\delta$ ( 60) | 0,136 | 0,157 |
| SE 60 | 6,77 | 7,13 |
| VE 60 | 0,92 | 1,12 |
| LC | 0,020 | 0,022 |

Beispiel 6 belegt, daß nur Schwefel-modifizierte CR-Gele zu einer Hystereseverbesserung führen. Im Vergleichsbeispiel V-4 wird durch den Zusatz von schwefelfreiem Polychloropren-Gel VIII zwar ein Verstrammungseffekt beobachtet, es resultiert aber keine Reduktion des tan $\delta$.

| Beispiel | 6 | V-4 | V-5 |
|---|---|---|---|
| Buna SL 750 | 123,8 | 123,8 | 137,5 |
| CR-Gel I | 10,0 | - | - |
| Ruß N 220 | 70 | 70 | 70 |
| ZnO-RS | 3,0 | 3,0 | 3,0 |
| Vulkanox 4010 NA | 1,0 | 1,0 | 1,0 |
| Stearinsäure | 1,0 | 1,0 | 1,0 |
| CR-Gel VIII | - | 10 | - |
| Vulkacit NZ | 1,2 | 1,2 | 1,2 |
| Schwefel | 1,8 | 1,8 | 1,8 |
| F | 22,4 | 22,7 | 22,5 |
| D | 365 | 475 | 580 |
| M 100 | 3,1 | 2,3 | 1,6 |
| M 300 | 18,1 | 12,4 | 9,0 |
| H 23 | 62 | 62 | 64 |
| tan $\delta$ ( 30) | 0,092 | 0,116 | 0,111 |
| tan $\delta$ ( 70) | 0,080 | 0,108 | 0,107 |
| tan $\delta$ (110) | 0,067 | 0,088 | 0,086 |

Beispiel 7 zeigt die Eigenschaften eines Vulkanisats der Mischung aus Emulsions-SBR (hier Buna EM 1721) und CR-Gel I. Die verbesserten Hystereseeigenschaften kommen in der erhöhten Elastizität bei 70 °C und dem reduzierten Heat build-up zum Ausdruck.

| Beispiel | 7 | V-6 |
|---|---|---|
| Buna EM 1721 | 123,8 | 137,5 |
| CR-Gel I | 10 | - |
| Stearinsäure | 1,0 | 1,0 |
| ZnO-RS | 3,0 | 3,0 |
| Ruß N 234 | 80 | 80 |
| Ingralen 450 | 7,0 | 7,0 |
| Vulkanox 4010 NA | 1,0 | 1,0 |
| Vulkacit NZ | 1,5 | 1,5 |
| Schwefel | 1,5 | 1,5 |
| F | 16,7 | 19,5 |
| D | 350 | 530 |
| M 100 | 3,3 | 2,0 |
| M 300 | 15,7 | 10,4 |
| H 70 | 64 | 56 |
| E 23 | 16 | 16 |
| E 70 | 39 | 35 |
| STR | 265 | 265 |
| HBU-2 | 33 | 36 |
| ABR 4 | 215 | 222 |

Beispiel 8 liefert die Vulkanisateigenschaften der Mischung aus Buna EM 1712 und CR-Gel I. Als Vergleich dient einmal die CR-Gel-freie Referenz V-7. Daneben wurde in V-8 handelsübliches gelfreies Schwefel-modifiziertes Polychloropren verwendet. Es resultiert für diese Mischung praktisch keine Verbesserung der Elastizität; das Abriebverhalten ist deutlich schlechter als in der erfindungsgemäßen Mischung 8.

| Beispiel | 8 | V-7 | V-8 |
|---|---|---|---|
| Buna EM 1712 | 123,8 | 137,5 | 123,8 |
| CR | 10 Gel I | - | 10 Baypren 610 |
| Stearinsäure | 1,0 | 1,0 | 1,0 |
| ZnO-RS | 3,0 | 3,0 | 3,0 |
| N 220 | 70,0 | 70,0 | 70,0 |
| Vulkanox 4010 NA | 1,0 | 1,0 | 1,0 |
| Vulkacit NZ | 1,2 | 1,2 | 1,2 |
| Schwefel | 1,8 | 1,8 | 1,8 |
| F | 15,9 | 18,2 | 17,3 |
| D | 310 | 510 | 410 |
| M 100 | 2,9 | 1,8 | 2,3 |
| M 300 | - | 9,4 | 12,7 |
| H 23 | 67 | 62 | 66 |
| H 70 | 64 | 57 | 60 |
| E 23 | 30 | 31 | 30 |
| E 70 | 52 | 45 | 47 |
| ABR 4 | 109 | 126 | 136 |
| tan $\delta$ | 0,158 | 0,168 | 0,172 |
| HBU-2 | 25 | 30 | 28 |

Das folgende Beispiel 8.1 zeigt das Ergebnis eines Zusatzes von CR-Gel I in einer NR/BR-Verschnittqualität (Vergleichsbeispiel V-8.1). Bei gleichwertigem Abriebwiderstand wird eine deutliche Verbesserung der Hysterese-Eigenschaften erzielt.

| Beispiel | 8.1 | V-8.1 |
|---|---|---|
| NR | 80 | 80 |
| Buna CB 22 | 20 | 20 |
| CR-Gel I | 10 | - |
| Stearinsäure | 2 | 2 |
| ZnO RS | 3 | 3 |
| N 110 | 44 | 44 |
| Vulkanox 4010 NA | 1,5 | 1,5 |
| Vulkanox HS | 1,5 | 1,5 |
| Vulkacit MOZ | 1,5 | 1,5 |
| Schwefel | 1,2 | 1,2 |
| F | 22,5 | 23,5 |
| D | 465 | 520 |
| M 100 | 2,2 | 2,2 |
| M 300 | 12,5 | 11,6 |
| H 23 | 64 | 65 |
| H 70 | 62 | 60 |
| E 23 | 55 | 47 |
| E 70 | 66 | 58 |
| ABR 4 | 106 | 110 |
| HBU 2 | 18 | 26 |
| tan $\delta$ (60) | 0,087 | 0,113 |
| SE 60 | 7,05 | 7,01 |
| VE 60 | 0,61 | 0,77 |
| LC 60 | 0,012 | 0,018 |

In Beispiel 9 werden die Eigenschaften eines Vulkanisats auf Basis einer Mischung bestehend aus Naturkautschuk, E-SBR, Polybutadien und CR-Gel I aufgeführt. Gegenüber der Vergleichsmischung wird eine Reduktion des tan $\delta$ und der Loss compliance bei verbessertem Abriebverhalten erhalten.

| Beispiel | 9 | V-9 |
|---|---|---|
| SMR-5, Defo 700 | 25 | 25 |
| Buna EM 1721 | 68,8 | 68,8 |
| Buna CB 30 | 20,6 | 20,6 |
| CR-Gel I | 10 | - |
| Buna CB 22 | - | 10 |
| Stearinsäure | 1,0 | 1,0 |
| ZnO-RS | 3,0 | 3,0 |
| Ruß N 220 | 65 | 70 |
| Vulkanox 4010 NA | 1,0 | 1,0 |
| Vulkacit NZ | 0,9 | 0,9 |
| Schwefel | 1,2 | 1,3 |
| F | 19,4 | 19,4 |
| D | 470 | 725 |
| M 100 | 2,5 | 1,4 |
| M 300 | 12,2 | 6,0 |
| tan $\delta$ (60) | 0,192 | 0,207 |
| SE (60) | 7,52 | 5,43 |
| VE (60) | 1,45 | 1,13 |
| LC (60 | 0,031 | 0,037 |
| ABR-6 | 86 | 107 |

14

Beispiele 10 bis 15 zeigen, daß die CR-Gele breit variiert werden können (siehe Tabelle 1) und daß die vorteilhaften Vulkanisateigenschaften bezüglich Elastizität, Heat build-up, tan $\delta$ und Loss compliance sich bestätigen.

| Beispiel | 10 | 11 | 12 | 13 | 14 | 15 | V-10 |
|---|---|---|---|---|---|---|---|
| Buna SL 750 | 123,8 | 123,8 | 123,8 | 123,8 | 123,8 | 123,8 | 137,5 |
| CR-Gel II | 10 | - | - | - | - | - | - |
| CR-Gel III | - | 10 | - | - | - | - | - |
| CR-Gel IV | - | - | 10 | - | - | - | - |
| CR-Gel V | - | - | - | 10 | - | - | - |
| CR-Gel VI | - | - | - | - | 10 | - | - |
| CR-Gel VII | - | - | - | - | - | 10 | - |
| Stearinsäure | 1,0 | 1,0 | 1,0 | 1,0 | 1,0 | 1,0 | 1,0 |
| ZnO-RS | 3,0 | 3,0 | 3,0 | 3,0 | 3,0 | 3,0 | 3,0 |
| Ruß N 220 | 65 | 65 | 65 | 65 | 65 | 65 | 75 |
| Vulkanox 4010 NA | 1,0 | 1,0 | 1,0 | 1,0 | 1,0 | 1,0 | 1,0 |
| Vulkacit NZ | 1,2 | 1,2 | 1,2 | 1,2 | 1,2 | 1,2 | 1,2 |
| Schwefel | 1,5 | 1,5 | 1,5 | 1,5 | 1,5 | 1,5 | 1,8 |

| Beispiel | 10 | 11 | 12 | 13 | 14 | 15 | V-10 |
|---|---|---|---|---|---|---|---|
| F | 17,3 | 17,1 | 16,3 | 17,5 | 17,0 | 17,4 | 18,3 |
| D | 415 | 385 | 390 | 410 | 420 | 400 | 481 |
| M 100 | 2,3 | 2,3 | 2,3 | 2,2 | 2,3 | 2,3 | 2,0 |
| M 300 | 12,7 | 13,4 | 12,9 | 12,5 | 12,7 | 13,0 | 10,7 |
| H 23 | 65 | 65 | 65 | 64 | 65 | 64 | 64 |
| H 70 | 62 | 62 | 62 | 61 | 62 | 62 | 60 |
| E 23 | 40 | 38 | 40 | 40 | 39 | 40 | 36 |
| E 70 | 52 | 52 | 54 | 54 | 53 | 54 | 48 |
| HBU-2 | 25,7 | 25,4 | 25,5 | 25,9 | 25,8 | 25,4 | 43,2 |
| tan 60 | 0,146 | 0,149 | 0,144 | 0,143 | 0,145 | 0,143 | 0,176 |
| SE 60 | 7,13 | 7,23 | 7,02 | 7,06 | 7,20 | 7,06 | 7,13 |
| VE 60 | 1,04 | 1,08 | 1,02 | 1,02 | 1,04 | 1,01 | 1,26 |
| LC 60 | 0,020 | 0,020 | 0,020 | 0,020 | 0,020 | 0,020 | 0,024 |

**Patentansprüche**

1. Mischungen aus

    A. Polychloropren, das neben polymerisierten 2-Chloropreneinheiten bis 30 Gew.-%, bezogen auf Chloroprenpolymerisat, copolymerisierte Einheiten anderer ethylenisch ungesättigter Monomerer

16

EP 0 405 216 B1

enthält, und

B. anderem C = C-Doppelbindungen enthaltenden, nicht auf der Grundlage von Polychloropren (A) basierenden Kautschuk,

wobei, bezogen auf die Summe der Komponenten A + B, die Menge Polychloropren A 1 bis 40 Gew.-% beträgt,

dadurch gekennzeichnet, daß, wieder bezogen auf die Summe der Komponenten A + B, 1 bis 30 Gew.-% Polychloropren Schwefel-modifiziert und vernetzt sind.

2. Mischungen nach Anspruch 1, wobei die Menge Polychloropren A 3 bis 30 Gew.-% beträgt.

3. Mischungen nach Ansprüchen 1 und 2, wobei die Menge Polychloropren A 5 bis 20 Gew.-% beträgt.

4. Mischungen nach Ansprüchen 1 bis 3, wobei 3 bis 15 Gew.-% Polychloropren Schwefel-modifiziert und vernetzt sind.

5. Mischungen nach Ansprüchen 1 bis 4, wobei 5 bis 12 Gew.-% Polychloropren Schwefel-modifiziert und vernetzt sind.

6. Mischungen nach Ansprüchen 1 bis 5, wobei der Kauschuk B aus der Reihe Naturkautschuk, Polyisopren, Polybutadien, SBR ausgewählt ist.

7. Verfahren zur Herstellung der Mischungen nach Ansprüchen 1 bis 6 durch Vereinigen der Komponenten in fester Form.

8. Verfahren zur Herstellung der Mischungen nach Ansprüchen 1 bis 6 durch Vereinigen der Komponenten in Form ihrer Latices und gemeinsame Aufarbeitung.

9. Aus den Mischungen nach Ansprüchen 1 bis 6 hergestellte Vulkanisate.

**Claims**

1. Mixtures of

A. polychloroprene which, in addition to polymerized 2-chloroprene units, contains up to 30% by weight, based on chloroprene polymer, of copolymerized units of other ethylenically unsaturated monomers and

B. another rubber containing C = C double bonds which is not based on polychloroprene (A),

the quantity of polychloroprene A, based on the sum of components A + B, being from 1 to 40% by weight, characterized in that, again based on the sum of components A + B, 1 to 30% by weight of the polychloroprene is sulfur-modified and crosslinked.

2. Mixtures as claimed in claim 1, in which the quantity of polychloroprene A is from 3 to 30% by weight.

3. Mixtures as claimed in claims 1 and 2, in which the quantity of polychloroprene A is from 5 to 20% by weight.

4. Mixtures as claimed in claims 1 to 3, in which 3 to 15% by weight of the polychloroprene is sulfur-modified and crosslinked.

5. Mixtures as claimed in claims 1 to 4, in which 5 to 12% by weight of the polychloroprene is sulfur-modified and crosslinked.

6. Mixtures as claimed in claims 1 to 5, in which the rubber B is selected from the group consisting of natural rubber, polyisoprene, polybutadiene, SBR.

7. A process for the production of the mixtures claimed in claims 1 to 6 by combining the components in solid form.

17

8. A process for the production of the mixtures claimed in claims 1 to 6 by combining the components in the form of their latices and working up the latices together.

9. Vulcanizates produced from the mixtures claimed in claims 1 to 6.

**Revendications**

1. Mélanges de :
    A. un polychloroprène contenant, avec des motifs polymérisés de 2-chloroprène, jusqu'à 30 % en poids, par rapport au polymère de chloroprène, de motifs copolymérisés d'autres monomères à insaturation éthylénique et
    B. un autre caoutchouc contenant des doubles liaisons C = C et qui n'est pas à base de polychloroprène (A),
    la quantité du polychloroprène A représentant de 1 à 40 % du poids total des composants A + B,
    caractérisé en ce que, toujours par rapport à la somme des composants A + B, 1 à 30 % en poids de polychloroprène sont modifiés au soufre et réticulés.

2. Mélanges selon la revendication 1 dans lesquels la quantité du polychloroprène A est de 3 à 30 % en poids.

3. Mélanges selon les revendications 1 et 2 dans lesquels la quantité du polychloroprène A est de 5 à 20 % en poids.

4. Mélanges selon les revendications 1 à 3 dans lesquels 3 à 15 % en poids de polychloroprène sont modifiés au soufre et réticulés.

5. Mélanges selon les revendications 1 à 4 dans lesquels 5 à 12 % en poids de polychloroprène sont modifiés au soufre et réticulés.

6. Mélanges selon les revendications 1 à 5 dans lesquels le caoutchouc B est choisi dans le groupe du caoutchouc naturel, du polyisoprène, du polybutadiène et des caoutchoucs SBR.

7. Procédé de préparation des mélanges selon les revendications 1 à 6 par combinaison des composants à l'état solide.

8. Procédé de préparation selon les revendications 1 à 6 par combinaison des composants à l'état de latex et traitement usuel du latex mélangé.

9. Vulcanisats préparés à partir des mélanges selon les revendications 1 à 6.